(19) Europäisches Patentamt / European Patent Office / Office européen des brevets

(11) **EP 1 642 433 B1**

(12) **FASCICULE DE BREVET EUROPEEN**

(45) Date de publication et mention de la délivrance du brevet:
**02.11.2011 Bulletin 2011/44**

(51) Int Cl.:
***H04L 27/26*** *(2006.01)*

(21) Numéro de dépôt: **04741889.2**

(22) Date de dépôt: **25.06.2004**

(86) Numéro de dépôt international:
**PCT/EP2004/051236**

(87) Numéro de publication internationale:
**WO 2005/004427 (13.01.2005 Gazette 2005/02)**

(54) **METHODE D'ESTIMATION DE RESIDU DE LA PORTEUSE, ESTIMATEUR ET SYSTEME DE MODULATION AVEC ASSERVISSEMENT DE LA PORTEUSE L'UTILISANT**

VERFAHREN ZUR SCHÄTZUNG EINES TRÄGERLECKENS, SCHÄTZER UND MODULATIONSSYSTEM MIT AUTOMATISCHER STEUERUNG EINES TRÄGERS UNTER VERWENDUNG DES SYSTEMS

METHOD FOR ESTIMATING A CARRIER LEAK, AN ESTIMATOR AND MODULATION SYSTEM PROVIDED WITH AUTOMATIC CONTROL OF A CARRIER USING SAID SYSTEM

(84) Etats contractants désignés:
**AT BE BG CH CY CZ DE DK EE ES FI FR GB GR HU IE IT LI LU MC NL PL PT RO SE SI SK TR**

(30) Priorité: **08.07.2003 FR 0308339**

(43) Date de publication de la demande:
**05.04.2006 Bulletin 2006/14**

(73) Titulaire: **Thomson Licensing**
**92130 Issy-les-Moulineaux (FR)**

(72) Inventeurs:
• **EYRIES, Julien**
  **F-94117 ARCUEIL (FR)**
• **BLAISE, René**
  **F-94117 ARCUEIL (FR)**

(74) Mandataire: **Dreiss**
**Patentanwälte**
**Postfach 10 37 62**
**70032 Stuttgart (DE)**

(56) Documents cités:
**EP-A- 0 689 313**        **US-A- 6 028 900**
**US-A1- 2002 145 969**

## Description

L'invention concerne une méthode d'estimation du résidu de la porteuse. Notamment, cette estimation du résidu de la porteuse permet l'asservissement de la porteuse lors de la modulation et/ou de la démodulation de signaux: émis, par exemple, par des systèmes de diffusion et de communication.

Les systèmes de diffusion et de communication comportent un émetteur effectuant la modulation d'un signal avant transmission et un récepteur démodulant le signal reçu. Le couple modulateur/démodulateur doit être stable et présenter une précision déterminée (même s'il est stable) afin d'avoir les performances requises.

Un nombre croissant d'applications dans le domaine de la diffusion et des communications utilisent l'OFDM. Une des possibilités de cette technique est l'utilisation comme pilote de la fréquence porteuse centrale pour les autres porteuses. Dans ce cas, la dégradation de la précision peut être liée à une mauvaise réjection du résidu de la porteuse centrale. Ainsi, la qualité de la réjection peut s'avérer insuffisante pour certaines applications et/ou certains utilisateurs.

De manière générale, ce problème est appelé problème de résidu de la porteuse. En effet, il apparaît aussi dans des systèmes utilisant une seule fréquence porteuse centrale (e.g., modulation 8-VSB).

Aujourd'hui, dans le cadre des systèmes de diffusion DVB-T, dans les zones où les émetteurs fournissent un signal avec une porteuse insuffisamment précise, certains récepteurs peuvent être dans un mode qui ignore la porteuse centrale. Cela entraîne une dégradation du signal en réception en terme de rapport d'erreur de modulation (MER, modulation error ratio) mais aussi de taux d'erreurs binaires (BER, bit error rate).

Dans le cas de la norme DVB-T par exemple, qui utilise la modulation OFDM, les radio-diffuseurs souhaitent obtenir en sortie d'émetteur un rapport d'erreur de modulation (MER, modulation error ratio) d'au minimum 30 dB et un taux d'erreur binaire (BER) avant Viterbi de $10^{-5}$ minimum. Or, avec une porteuse centrale dégradée, le rapport d'erreur de modulation MER est souvent inférieur à 30 dB et le taux d'erreur binaire BER est supérieur à celui requis par les radio-diffuseurs, par exempte de l'ordre de $10^{-3}$.

Le document US 6,028,900 (Taura et al.), public ee 22 février 2000, decrit une méthode de conection de résidu de la porteuse dans un système utilisant la modulation OFDM.

Pour améliorer la qualité de réjection de la porteuse, diverses solutions sont envisageables.

Notamment, des moyens de passage en fréquence intermédiaire peuvent être utilisés. Le problème est ainsi annulé en théorie mais l'utilisation de plusieurs synthétiseurs au lieu d'un seul est nécessaire. En outre, cette méthode implique des contraintes au niveau du filtrage car le signal n'est plus en bande de base.

Une autre solution est le réglage manuel fréquent des modulateurs. Cette méthode nécessite des appareil de mesure externes performants comme des analyseur de modulation (par exemple, du type EFA™, analyseur de modulation DVB-T). En outre, cette solution ne permet pas une adaptation rapide. Et, elle nécessite la présence permanente d'un opérateur qualifié.

Un autre inconvénient de ces solutions est quelles sont des solutions très coûteuses.

Une autre solution est l'asservissement d'un système à modulation IQ directe par un système à démodulation directe. En effet, un système de modulation directe possède un certain nombre de commandes ou paramètres de compensation pour agir sur les défauts de résidu de porteuse. Actuellement, l'asservissement d'un système à modulation IQ directe par un système à démodulation directe est limité à la précision intrinsèque du démodulateur.

Pour résoudre le problème de résidu de la porteuse, une solution actuellement utilisée est la suivante. Dans une première étape, le démodulateur est calibré par un signal de test particulier en entrée du démodulateur. Mais, cette étape a une limite en termes de précision qui vient de ce que tout changement du signal d'entrée du démodulateur par rapport au signal d'exploitation se traduit par une imprécision sur ce réglage. Dans une deuxième étape, le signal entre l'entrée du système et la voie de retour est mesurée. Là encore, la précision est limitée. Cette limitation vient des paramètres suivants de qualité du codeur, de précision de la mesure et des traitements du signal. Dans une troisième étape, le résidu de la porteuse centrale est annulée.

La qualité de réjection de la porteuse centrale atteinte avec cette méthode peut tout de même s'avérer insuffisante pour certaines applications et utilisateurs. Pour améliorer ce système, l'utilisation de composants plus performants est envisageable (composants ayant une réjection de porteuse plus forte, ayant une meilleure précision...). Toutefois, l'utilisation de ce type de composants rend la solution très coûteuses.

La présente invention permet de palier ces inconvénients en permettant d'estimer le résidu de porteuse de manière plus précise tout en conservant une méthode à coût raisonnable.

Un objet de l'invention est une méthode d'estimation de résidu de la porteuse selon la revendication 1.

L'invention concerne, en outre, un estimateur de résidu de porteuse mettant en oeuvre la méthode d'estimation ci dessus selon la revendication 9.

Un autre objet de l'invention est un système de modulation avec asservissement de la porteuse selon la revendication 13.

Les caractéristiques et avantages de l'invention apparaîtront plus clairement à la lecture de la description, faite à titre d'exemple, et des figures s'y rapportant qui représentent :

EP 1 642 433 B1

- Figure 1, un schéma de principe d'un système de modulation IQ avec asservissement selon l'état de l'art,
- Figures 2a et 2b, les performances du système de modulation IQ avec asservissement selon l'état de l'art, la figure 2a représentant le spectre obtenu en sortie du démodulateur et la figure 2b représentant le taux d'erreur de modulation MER (modulation error rate),

- Figure 3, un schéma de principe d'un système de modulation IQ avec asservissement utilisant l'estimateur de résidu de porteuse selon l'invention,
- Figure 4, un exemple générique des moyens de variation de gain M1 de l'estimateur de résidu de porteuse selon l'invention,
- Figure 5, un exemple de réalisation des moyens de variation de gain M1 de l'estimateur de résidu de porteuse selon l'invention,
- Figure 6, un exemple générique des moyens de mesure et de calcul M2 de l'estimateur de résidu de porteuse selon l'invention,
- Figure 7, un exemple de réalisation des moyens de mesure et de calcul M2 de l'estimateur de résidu de porteuse selon l'invention pour des application avec porteuse centrale non nulle,
- Figure 8, un schéma de principe des moyens d'asservissement de la porteuse dans le modulateur,
- Figure 9, un schéma de principe des moyens d'asservissement de la porteuse dans le démodulateur,
- Figures 10a et 10b, les performances, respectivement en terme de taux d'erreur binaire BER et taux d'erreur de modulation MER (modulation error rate), du système de modulation IQ avec asservissement selon l'invention.

Actuellement les systèmes de modulation directe réalisés par des modulateurs IQ souffrent de certains défauts provenant de leur réalisation.

Typiquement un système de modulation directe possède un certain nombre de commandes ou paramètres de compensation pour agir sur ces défauts. L'asservissement d'un système à modulation IQ directe, par un système à démodulation directe est actuellement limité à la précision intrinsèque du démodulateur.

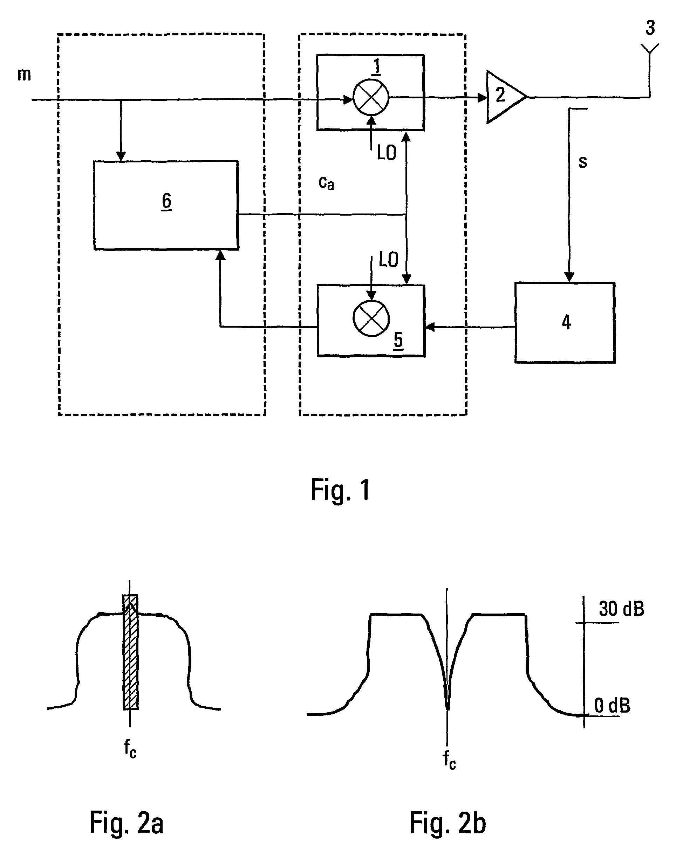

La figure 1 représente une solution actuellement utilisée pour résoudre ce problème de résidu de la porteuse.

Le signal à moduler m est traité par le modulateur 1 connecté à un oscillateur LO. Le signal modulé m est amplifié par un amplificateur 2 avant d'être émis sur la sortie RF (radio fréquence) 3. Afin d'asservir le modulateur 1, le signal retour s est traité par des moyens de calibrage 4 avant d'être démodulé pour permettre à des moyens d'asservissement 6 recevant le signal démodulé d de commander le modulateur 1 et le démodulateur 5 IQ. Le démodulateur 1Q 5 est connecté à un oscillateur LO fournissant la même fréquence locale qu'au modulateur.

Dans une première étape, les moyens de calibrage 4 envoient en entrée du démodulateur 5 un signal test particulier à la place du signal retour s. Le signal test permet de calibrer le démodulateur 5. Cette étape entraîne, toutefois, une limitation de la précision. Cette limitation de la précision vient du fait que tout changement du signal d'entrée du démodulateur par rapport au signal d'exploitation se traduit par une imprécision sur ce réglage.

Dans une deuxième étape, les moyens de calibrage 4 transmette en entrée du démodulateur 5 le signal retour s. Les moyens d'asservissement 6 mesurent le signal à l'entrée du système (avant le modulateur 1) et sur la voie de retour en sortie du démodulateur 5. Cette étape entraîne, elle aussi, une limitation de la précision. Cette limitation de la précision vient de plusieurs paramètres, notamment elle est liée à la qualité du codeur , à la précision de la mesure, et aux différents traitements du signal. En particulier, la mesure faite à l'entrée du modulateur 1 permet de prendre en compte le résidu de porteuse induit par le modulateur mais pas celui induit par les traitements amonts (notamment, les erreurs de troncature du signal).

Dans une troisième étape, les moyens d'asservissements 6 viennent annuler le résidu de porteuse centrale, par exemple en injectant un offset de tension sur les voies 1 et Q, cet offset étant asservi sur les mesures de la deuxième étape.

La qualité de réjection de la porteuse centrale atteinte avec cette méthode s'avère insuffisante pour certaines applications et utilisateurs .

La figure 2a montre le spectre obtenu en sortie du modulateur dans le cas de l'utilisation de l'OFDM (Orthogonal Frequency Division Multiplex, ou multiplexage par division fréquentielle orthogonale). Dans la zone hachurée autour de la fréquence porteuse centrale $f_c$, la réception est de mauvaise qualité du fait du pic de puissance apparaissant autour de cette fréquence.

La figure 2b montre le taux d'erreur de modulation MER. Ce taux MER tombe à 0dB à la fréquence porteuse centrale $f_c$. Or, pour des applications tels que la télévision numérique (DVB-T par exemple), le taux doit être de l'ordre de 30 dB minimum en sortie d'émetteur. Le taux d'erreur binaire ainsi obtenue en sortie d'émetteur au niveau de la fréquence porteuse centrale $f_c$ est d'environ $10^{-3}$ au lieu des $10^{-5}$ nécessaires à certaines applications.

Les défauts affectant la porteuse centrale peuvent être modélisés de la manière suivante:

Le signal de référence m a une composante continue égale avec une position PA. PA est la position théorique de la composante continue du signal avant modulation. Cette position PA est décalée par le résidu de porteuse offset_mod introduit par le modulateur 1 pour atteindre la position PB. PB est donc la position de la porteuse centrale après modulation. C'est cette position qui est obtenue dans les récepteurs après égalisation du canal de transmission .

Le signal modulé m est amplifié par un gain complexe Z entre le modulateur et le démodulateur. En effet, tous les gains de la chaîne de transmission peuvent être rapportés en cet endroit. L'application de ce gain Z décale la fréquence porteuse centrale de la position PB vers la position PC. Donc, PC est la position de la porteuse centrale après application du gain Z.

Le signal est alors démodulé : le démodulateur 5 en introduisant un résidu de porteuse offset_demod décale la fréquence porteuse centrale de la position PC à la position PD. PD est la position relevée sur le signal de retour d.

Donc, la position de la fréquence porteuse centrale du signal en sortie du démodulateur 5' en fonction de la position théorique de la composante continue du signal avant modulation peut s'écrire comme suit :

$$PD = offset\_demod + Z*(offset\_mod + PA)$$

Ce système possède 3 inconnues : offset_demod, offset_mod, Z . Et, la position théorique de la composante continue du signal PA est une constante du système, définie par la nature du signal :

- PA = 0 pour la modulation 8-VSB (norme ATSC), pour les modulations de TV analogique (normes PAL / SECAM / NTSC)
- PA $\neq$ 0 pour la modulation OFDM (norme DVB-T). Par exemple, PA = -4/3 en DVB-T .

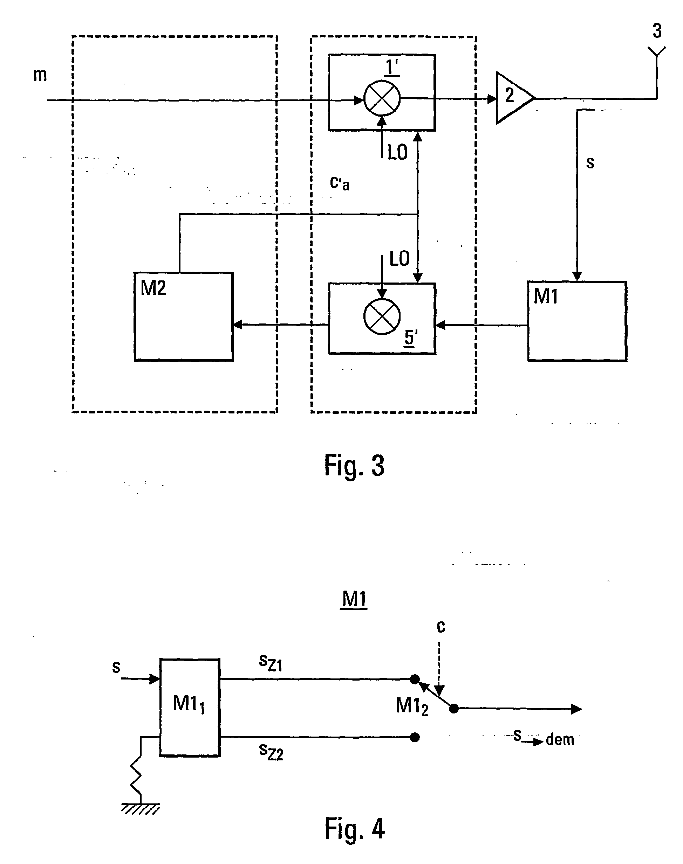

La figure 3 montre un schéma de principe du système d'asservissement de la fréquence porteuse selon l'invention permettant de déterminer le résidu de porteuse offset_mod induit par le modulateur 1', et le résidu de porteuse offset_demod induit par le démodulateur 5'.

La méthode mise en oeuvre par ce système est de faire varier volontairement les caractéristiques du gain complexe Z de la voie de retour, afin de séparer la contribution offset_mod du modulateur de la contribution offset_demod du démodulateur au niveau de l'offset mesuré sur le signal de retour.

Dans le cas où la position de la fréquence porteuse centrale est non nulle PA $\neq$ 0, cette méthode comporte aussi l'estimation à partir du signal de retour le gain complexe Z appliqué au signal et la position de la porteuse centrale par rapport à sa position théorique.

Le signal m est fourni au modulateur 1' qui fournit un signal modulé m à l'amplificateur 2. Le signal obtenu s est émis sur la sortie RF 3. Le signal s est le signal entrant sur la voie de retour du système d'asservissement de la porteuse.

Conformément au premier point de la méthode exposée ci-dessus, des moyens de variation de gain complexe M1 reçoivent le signal s. Ces moyens de variation de gain fournissent un signal sZ correspondant au signal de retour s auquel un gain Z donné a été appliqué.

La figure 4 montre un schéma générique des moyens de variation de gain complexe M1. Les moyens de variation de gain complexe M1 comporte des moyens d'application $M1_1$ de gain(s) complexe(s) appliquant des gains complexes différents Z1, Z2 à la voie de retour s, suivi de moyens de sélection $M1_2$ permettant de sélectionner le signal retour $s_{\rightarrow dem} = s_Z = s_{Z1}$ ou $s_{Z2}$ correspondant, respectivement, au gain Z1 ou Z2 en fonction d'un signal de commande c.

Le gain Z1 peut être appliqué à un instant donné (t1) et durant une période prédéterminée T1 et le gain complexe Z2 à un instant donné t2 et durant une période prédéterminée T2.

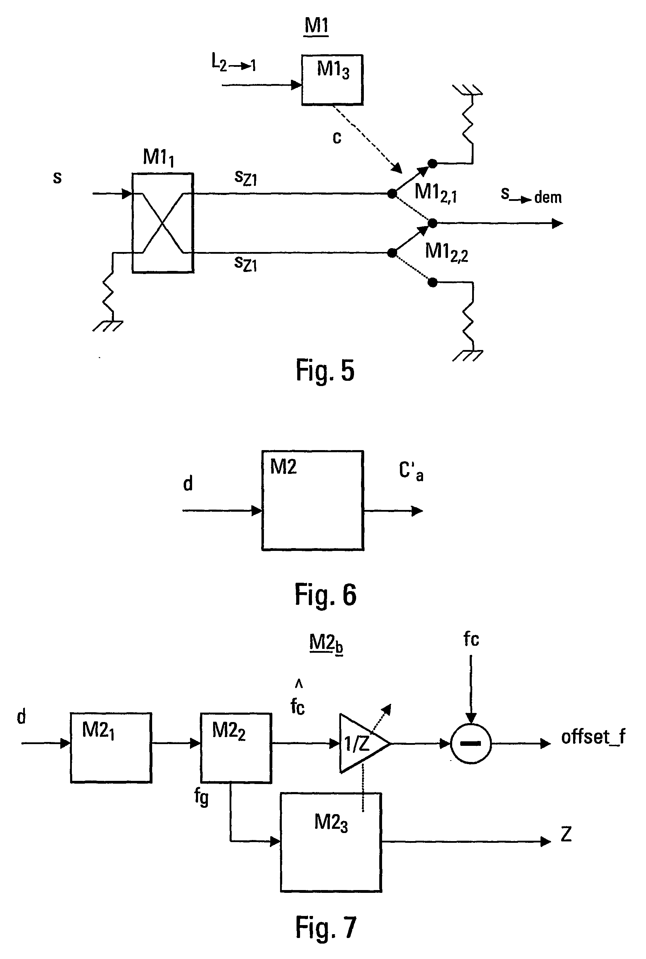

Une réalisation possible des moyens de variation de gain complexe M1 est présentée par la figure 5. Les moyens de variation de gain complexe M1 comporte 2 relais UHF ainsi qu'un coupleur UHF 0°-90°, placé sur le chemin du retour. Le coupleur 0°-90° constitue les complexe sur la deuxième sortie est égale à Z2 = Z1. $e^{i\pi\varphi/180}$, avec $\varphi$ proche de 90°.

Dans une autre réalisation possible des moyens de variation de gain complexe M1, les gains Z1 et Z2 peuvent être tels que Z2=-Z1. Le coupleur $M1_1$ des moyens de variation de gain complexe M1 peut être ainsi remplacé par un transformateur ou un amplificateur afin d'obtenir un tel déphasage de 180 °.

D'autres déphasages peuvent être obtenus, en utilisant comme moyens d'application de gain $M1_1$ une longueur électrique pour obtenir le déphasage désiré.

Une liaison $L_{2\rightarrow 1}$, par exemple une liaison de type RS232, entre les moyens de mesure et de calcul et les moyens de variation de gain M1 permet de choisir de connecter à la sortie de M1 soit la sortie 0° du coupleur, soit la sortie 90° du coupleur : $s_{\rightarrow dem} = s_Z = s_{Z1}$ ou $s_{iZ1}$. Notamment, comme le montre la figure 4, cette liaison $L_{2\rightarrow 1}$ peut effectuer la commande des relais qui constituent les moyens de sélection $M1_1$.

Dans un autre mode de réalisation de M1, les relais $M1_2$ peuvent être remplacés par des commutateurs en combinaison avec l'un quelconque des modes de réalisation des moyens d'application du gain $M1_1$.

Le signal $s_Z$ obtenu par les moyens de variation de gain M1 est fourni au démodulateur 5' utilisant la même fréquence locale que le modulateur 1'.

Conformément au deuxième point de la méthode exposée ci-dessus, les moyens de mesure et de calcul M2 estiment le gain complexe Z appliqué. Comme le montre la figure 6, ces moyens de mesure et de calcul M2 reçoivent le signal retour démodulé d (= $d_{Z1}$ ou $d_{Z2}$ en fonction du gain appliqué) et fournissent les commandes d'asservissement au modulateur 1' afin de supprimer le résidu de porteuse introduit par le modulateur.

La méthode mise en oeuvre par les moyens de mesure et de calcul M2 comporte :

- La mesure des positions PD1 et PD2 de la porteuse centrale du signal démodulé pour chacun des gains appliqués, respectivement $d_{Z1}$ et $d_{Z2}$ ; et
- Le calcul de la partie du résidu de la porteuse (offset_mod) correspondant au résidu dû au modulateur à partir des positions mesurées PD1 et PD2 et des gains appliquées Z1et Z2.

Cette méthode d'estimation peut prévoir qu'une autre partie du résidu de la porteuse soit calculée à partir des positions mesurées PD1 et PD2 et des gains appliquées Z1et Z2. Cette autre partie du résidu de la porteuse calculée correspond au résidu dû au démodulateur (offset_demod). Comme le montre la figure 3, les moyens de mesure et de calcul M2 peuvent ainsi fournir des commandes d'asservissement $c'_a$ aussi au démodulateur 5' afin de supprimer le résidu de porteuse introduit par le démodulateur.

Selon le type de modulation, les moyens de mesure et de calcul M2 peuvent être réalisés de différentes manières pour mettre en oeuvre cette méthode d'estimation du résidu de porteuse.

Dans une première variante, particulièrement adaptée pour les modulations dont la porteuse centrale est nulle (PA=0), telles que par exemple 8-VSB, les moyens de mesure et de calcul M2a peuvent comporter un dispositif de mesure. Le dispositif de mesure vient relever les positions PD1 et PD2 de la porteuse centrale en sortie du démodulateur pour chacun des gains Z1 et Z2 respectifs. Les moyens de mesure et de calcul M2 effectue ensuite la minimisation de la différence entre les deux positions mesurées $\|PD2\text{-}PD1\|$ pour obtenir la commande d'asservissement C'a faisant converger le résidu de porteuse offset_mod dû au modulateur vers zéro.

En effet, les moyens de mesure et de calcul M2a étant adaptés aux modulations pour lesquelles PA=0 ( par exemple 8-VSB), l'équation de la position PD de la fréquence porteuse centrale du signal en sortie du démodulateur 5' en fonction de la position théorique PA de la composante continue du signal avant modulation est simplifiée :

$$PD = \text{offset\_demod} + Z*\text{offset\_mod}$$

Donc, afin d'annuler le résidu de porteuse offset_mod dû au modulateur 1', les moyens de mesure et de calcul M2 effectuent alors la recherche des paramètres d'asservissement C'a qui minimisent le terme $\|PD2 - PD1\|$, car

$$PD1 = \text{offset\_demod} + Z1*\text{offset\_mod}$$

et

$$PD2 = \text{offset\_demod} + Z2*\text{offset\_mod},$$

donc offset_mod = (PD2 - PD1) / (Z2 - Z1),
d'où $\|\text{offset\_mod}\| = K * \|PD2 - PD1\|$,
avec $K = 1/\|Z2 - Z1\|$ est une constante strictement positive dépendant uniquement Z1 et Z2 .

Cette recherche du minimum peut être effectuée par diverses méthodes du type gradient, parmi d'autres.

Dans une deuxième variante, particulièrement adaptée pour les modulations dont la porteuse centrale est non nulle (PA≠0), telles que par exemple OFDM, les moyens de mesure et de calcul M2b peuvent comporter un dispositif de mesure. Le dispositif de mesure vient relever les positions PD1 et PD2 de la porteuse centrale en sortie du démodulateur pour chacun des gains Z1 et Z2 respectifs.

Par rapport à la solution apportée pour le cas de la position de la porteuse centrale nulle PA=0, les moyens de mesure et de calcul M2b de cette deuxième variante comporte des moyens permettant de séparer les valeurs de offset_mod et de PA à partir des mesures PD1 et PD2.

A cet effet, les moyens de mesure et de calcul M2b mesure le gain complexe Z appliqué à partir du signal démodulé d.

Dans l'exemple illustré par la figure 7, les moyens de mesure et de calcul M2b peuvent comporter un démodulateur OFDM simplifié qui permet de mesurer le gain complexe Z appliqué à un signal OFDM comme le montre la figure 7. Le démodulateur simplifié comporte des moyens de synchronisation $M2_1$ recevant le signal démodulé d, des moyens de transformation de Fourier $M2_2$ (par exemple de type FFT, Fast Fourier Transform ou transformée de Fourier rapide) connectés à la sortie des moyens de synchronisation $M2_1$ et fournissant la porteuse centrale de la voie retour $f_c$ et les porteuses pilotes $f_g$. Le gain Z est alors estimé par des moyens d'estimation de gain $M2_3$ à partir des porteuses pilotes du signal démodulé d.

Les moyens de mesure et de calcul M2b connaissant la valeur de Z appliquée viennent alors appliquer un gain de 1/Z à la position de la porteuse centrale PD mesurée, dans notre exemple, par les moyens de transformation de Fourrier $M2_2$. Cela permet d'obtenir la position PF de la porteuse centrale correspondant à :

$$PF = PA + offset\_mod + offset\_demod*(1/Z)$$

Puis, les moyens de mesure et de calcul M2b effectuent une opération de différence entre la valeur ainsi obtenue et la porteuse centrale théorique PA (par exemple, PA = - 4/3 en DVB-T) permettant d'obtenir l'offset relatif de la porteuse centrale par rapport à la position théorique dans la constellation pour chaque valeur de Z : offset_f1 et offset_f2.

$$offset\_f = PF - PA = offset\_mod + offset\_demod*(1/Z)$$

Les moyens de mesure et de calcul M2b effectuent ensuite l'opération $offset\_f1 - \dfrac{1}{Z1}\dfrac{(offset\_f2 - offset\_f1)}{((1/Z2) - 1/Z1))}$ permettant d'obtenir la partie du résidu de la porteuse dû au modulateur (offset-mod). En outre, les moyens de mesure et de calcul M2b peuvent effectuer l'opération pour obtenir la partie du résidu de la porteuse dû au démodulateur (offset_dém).

La précision maximale pour le calcul des résidus de porteuse offset_mod et offset_dem est obtenue dans le cas particulier Z2 = -Z1 , qui correspond à un déphasage de 180° . De manière générale, il est conseillé dans la réalisation de M1 de prendre un déphasage assez grand entre Z1 et Z2 .

Les moyens de mesure et de calcul M2b cherchent ensuite les paramètres d'asservissement $c'_a$ faisant converger les variables offset_mod et offset_demod vers zéro pour réaliser l'asservissement de la porteuse.

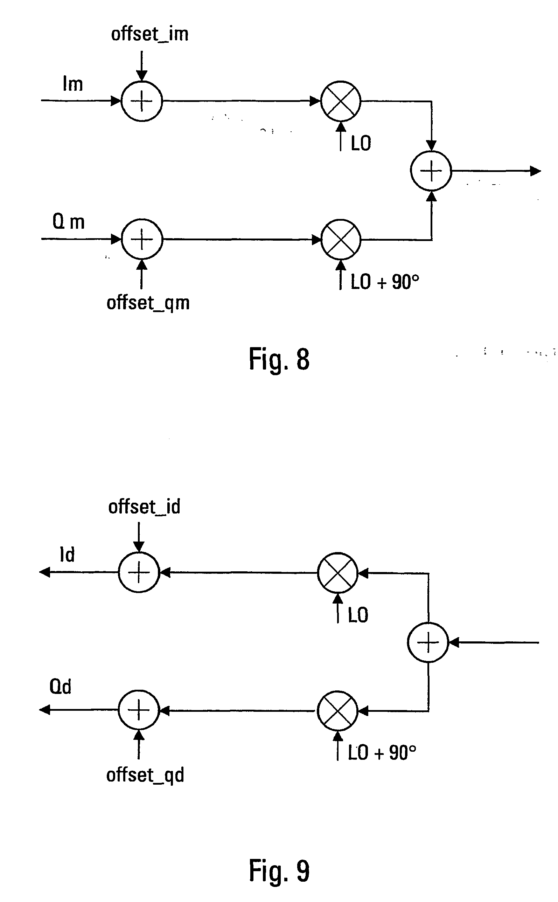

Les figures 8 et 9 proposent des schémas de principe décrivant un mode de réalisation d'asservissement, respectivement, d'un modulateur IQ et d'un démodulateur IQ.

Le modulateur IQ 1' de la figure 8 reçoit le signal à moduler m sous la forme de deux signaux en quadrature $I_m$ et $Q_m$ : m=$I_m$+i$Q_m$, et les paramètres d'asservissement $c_a$ qui correspondent dans ce cas à l'estimation du résidu de porteuse introduit par le modulateur offset_mod, eux aussi sous la forme de deux signaux en quadrature offset_im et offset_qm: offset_mod = - offset_im -i offset_qm. Le signal à moduler m et les paramètres d'asservissement sont additionnés respectivement en phase et en quadrature avant d'être modulés, par la fréquence local LO.

De la même manière, le démodulateur IQ 5' de la figure 9 reçoit le signal à démoduler s sous la forme de deux signaux en quadrature, et les paramètres d'asservissement C'a qui correspondent dans ce cas à l'estimation du résidu de porteuse introduit par le modulateur offset_dém, eux aussi sous la forme de deux signaux en quadrature offset_id et offset_qd : offset_demod= - offset_id -i offset_qd. Le signal à démoduler d est démodulé par la fréquence locale LO avant d'être additionné avec les paramètres d'asservissement respectivement en phase et en quadrature, pour obtenir le signal démodulé asservi d= Id+iQd.

Ainsi, pour faire converger offset_mod, on joue sur les paramètres d'asservissement du modulateur (offset_im et offset_qm), et pour faire converger offset_demod, on joue sur les paramètres d'asservissement du démodulateur (offset_id et offset_qd).

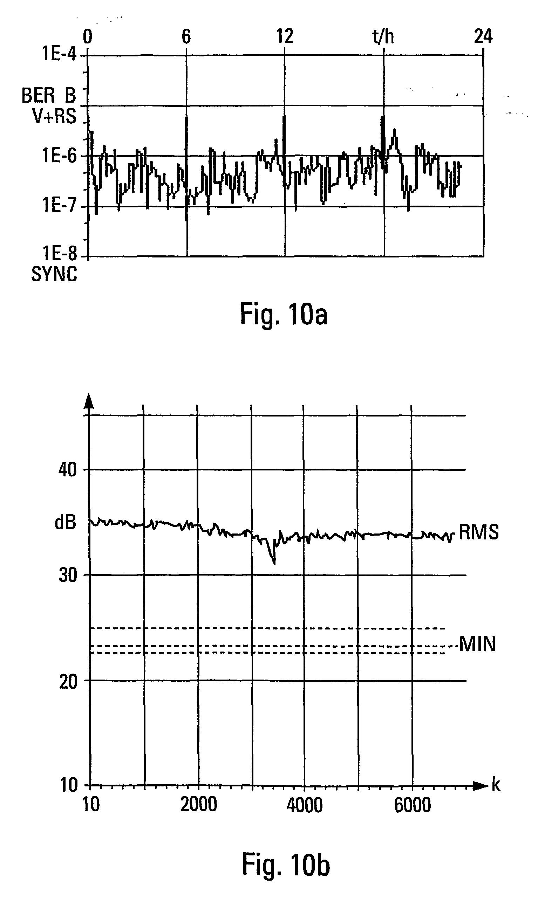

La figure 10a montre les performances en terme de taux d'erreur binaire BER obtenu à l'aide du système de modulation IQ avec asservissement selon l'invention. Dans l'exemple illustré par la figure 10a, le taux d'erreur binaire a évolué, pendant 24 heures, en moyenne entre $10^{-6}$ et $10^{-7}$, i.e. en dessous des $10^{-5}$ requis par les radio-diffuseurs.

La figure 10b montre les performances en terme de rapport d'erreur de modulation MER obtenu à l'aide du système de modulation IQ avec asservissement selon l'invention. Le rapport d'erreur de modulation MER obtenu est d'environ 35dB quelle que soit la fréquence sauf autour de la fréquence où il est légèrement inférieur. Toutefois, ce rapport MER reste supérieur à 30 dB comme requis par les radio-diffuseurs.

Cette méthode d'estimation du résidu de porteuse selon l'invention peut être mise en oeuvre par tous dispositifs et/ou dans toutes applications nécessitant une estimation précise du résidu de porteuse afin d'éviter une dégradation de ses performances.

## Revendications

1. Méthode d'estimation de résidu de la porteuse **caractérisée en ce qu'**elle comporte:

   - La réception d'un signal s modulé par un modulateur;
   - La variation d'un gain complexe Z appliqué au signal reçu s entre au moins deux valeurs Z1 et Z2 ;
   - La mesure de la position PD1 et PD2 de la porteuse centrale du signal s démodulé pour chacun des gains Z1 et Z2 appliqués ;
   - Le calcul d'au moins une partie du résidu de la porteuse à partir des positions mesurées PD1 et PD2 et des gains appliqués Z1 et Z2, la partie du résidu de la porteuse calculée correspondant au résidu dû au modulateur.

2. Méthode d'estimation selon la revendication précédente **caractérisée en ce que** le gain Z1 est appliqué à un instant donné t1 et durant une période prédéterminée T1 et le gain complexe Z2 à un instant donné t2 et durant une période prédéterminée T2.

3. Méthode d'estimation selon l'une quelconque des revendications précédentes **caractérisée en ce que** Z2=-Z1.

4. Méthode d'estimation selon l'une quelconque des revendications précédentes **caractérisée en ce qu'** une autre partie du résidu de la porteuse calculée à partir des positions mesurées PD1 et PD2 et des gains appliqués Z1 et Z2 correspond au résidu dû au démodulateur utilisé pour démoduler le signal s.

5. Méthode d'estimation selon l'une quelconque des revendications précédentes **caractérisée en ce que** le calcul d'au moins une partie du résidu de la porteuse comporte la minimisation de la différence entre les deux positions mesurées $\|PD2 - PD1\|$.

6. Méthode d'estimation selon la revendication précédente **caractérisée en ce que** la minimisation est effectuée par une méthode du type gradient.

7. Méthode d'estimation selon l'une quelconque des revendications 1 ou 4. **caractérisée en ce que** le calcul d'au moins une partie du résidu de la porteuse comporte :

   - la mesure du gain Z à partir du signal démodulé d,
   - l'application à la position mesurée PD d'un gain 1/Z avant la mesure de la position de la porteuse centrale et
   - la différence entre la valeur ainsi obtenue et la porteuse centrale théorique permettant d'obtenir une estimation du résidu de la porteuse pour chaque valeur de Z, offset_f1 et offsec_f2, et

   - l'opération $offset\_f1 - \dfrac{1}{Z1}\dfrac{(offset\_f2 - offset\_f1)}{((1/Z2) - 1/Z1)}$ permettant d'obtenir la partie du résidu de la porteuse dû au modulateur.

8. Méthode d'estimation selon la revendication précédente **caractérisée en ce que** le calcul d'au moins une partie du résidu de la porteuse comporte l'opération $\dfrac{(offset\_f2 - offset\_f1)}{((1/Z2) - 1/Z1)}$ permettant d'obtenir la partie du résidu de la porteuse dû au démodulateur

9. Estimateur de résidu de porteuse mettant en oeuvre la méthode d'estimation selon l'une quelconque des revendications 1 à 8 **caractérisé en ce qu'**il comporte :

   - des moyens de réception d'un signal s modulé par un modulateur; - des moyens de variation de gain (M1) permettant de faire varier un gain complexe Z appliqué au signal reçu s entre au moins deux valeurs prédéterminées Z1 et Z2 ;

- des moyens de mesure et de calcul (M2) permettant de mesurer la position PD1 et PD2, de la porteuse centrale du signal s démodulé pour chacun des gains Z1 et Z2, appliqués et de calculer au moins une partie du résidu de la porteuse à partir des positions mesurées PD1 et PD2 et des gains appliqués Z1 et Z2, la partie du résidu de la porteuse calculée correspondant au résidu dû au modulateur.

10. Estimateur selon la revendication précédente **caractérisé en ce qu'**il comporte une liaison entre les moyens de variation du gain (M1) et les moyens de mesure et de calcul (M2) permettant aux moyens de mesure et de calcul (M2) de choisir le gain appliqué par les moyens de variation du gain (M1).

11. Estimateur selon la revendication précédente **caractérisé en ce que** les moyens de variation du gain comportent 2 relais UHF ou 2 commutateurs: le premier recevant le signal s auquel le gain Z1 a été appliqué, le deuxième recevant le signal s auquel le gain Z2 a été appliqué, le relais correspondant au gain choisi par les moyens de mesure et de calcul (M2) étant relié à la sortie des moyens de variation du gain (M1)

12. Estimateur selon l'une quelconque des revendications 10 ou 11 **caractérisé en ce que** les moyens d'application des gains comportent :

   - soit un coupleur 0°-90° recevant le signal modulé s et transmettant ce signal s sur sa sortie 0°, et le signal s déphasé de 90° sur sa sortie 90°,
   - soit un transformateur ou un amplificateur recevant le signal modulé s et transmettant ce signal s, et le signal s déphasé de 180°,
   - soit une longueur électrique l recevant le signal modulé s et transmettant ce signal s, et le signal s déphasé de $\phi$ fonction de l.

13. Système de modulation avec asservissement de la porteuse comportant un modulateur recevant le signal à moduler m et fournissant le signal modulé s à émettre **caractérisé en ce qu'**il comporte :

   - Un estimateur selon l'une quelconque des revendications 10 à 12 recevant le signal modulé s,
   - Un démodulateur recevant le signal $S_Z$ provenant des moyens de variation du gain (M1) et fournissant aux moyens de mesure et de calcul le signal démodulé d,
   - Des moyens d'asservissement de la porteuse permettant d'ajouter au signal à moduler m le résidu de porteuse dû au modulateur fourni par les moyens de mesure et de calcul (M2).

14. Système de modulation selon la revendication précédente **caractérisé en ce que** les moyens d'asservissement de la porteuse permettent en outre d'ajouter au signal démodulé d le résidu de porteuse dû au démodulateur fourni par les moyens de mesure et de calcul (M2) avant de fournir le signal démodulé corrigé aux moyens de mesure et de calcul (M2).

15. Utilisation de la méthode d'estimation selon l'une quelconque des revendications 1 à 6 pour une modulation avec porteuse centrale nulle.

16. Utilisation de la méthode d'estimation selon l'une quelconque des revendications 1 à 4, ou 7, ou 8 pour une modulation avec porteuse centrale non nulle.

**Claims**

1. A method for estimating the carrier leak **characterized in that** it includes:

   - the reception of a signal s modulated by a modulator;
   - the variation of a complex gain Z applied to the received signal s between at least two values Z1 and Z2;
   - the measurement of the position PD1 and PD2 of the central carrier of the demodulated signal s for each one of the applied gains Z1 and Z2;
   - the calculation of at least one part of the carrier leak from the measured positions PD1 and PD2 and the applied gains Z1 and Z2, with the part of the leak of the calculated carrier corresponding to the leak caused by the modulator.

2. An estimation method according to the preceding claim, **characterized in that** the gain Z1 is applied at a given moment t1 and for a predetermined period of time T1 and the complex gain Z2 is applied at a given moment t2 and for a predetermined period of time T2.

3. An estimation method according to any one of the preceding claims, **characterized in that** Z2 = -Z1.

4. An estimation method according to any one of the preceding claims, **characterized in that** another part of the carrier leak calculated from the measured positions PD1 and PD2 and the applied gains Z1 and Z2 corresponds to the leak caused by the demodulator used for demodulating the signal s.

5. An estimation method according to any one of the preceding claims, **characterized in that** the calculation of at least one part of the carrier leak includes the minimization of the difference between the two measured positions $\|PD2 - PD1\|$.

6. An estimation method according to the preceding claim, **characterized in that** the minimization is executed by a method of the gradient type.

7. An estimation method according to any one of claims 1 or 4, **characterized in that** the calculation of at least one part of the carrier leak includes:

   - the measurement of the gain Z from the demodulated gain d,
   - the application, at the measured position PD, of a gain 1/Z prior to measuring the position of the central carrier and
   - the difference between the thus obtained value and the theoretical central carrier, making it possible to obtain an estimation of the carrier leak for each value of Z offset_f1 and offset_f2, and
   - the

$$offset\_f1 - \frac{1}{Z1}\frac{(offset\_f2-offset\_f1)}{((1/Z2) - 1/Z1))}$$

operation making it possible to obtain the part of the carrier leak caused by the demodulator.

8. An estimation method according to the preceding claim, **characterized in that** the calculation of at least one part of the carrier leak includes the

$$\frac{(offset\_f2-offset\_f1)}{((1/Z2) - 1/Z1))}$$

operation making it possible to obtain the part of the carrier leak caused by the demodulator.

9. A carrier leak estimator implementing the estimation method according to any one of claims 1 to 8, **characterized in that** it includes:

   - means for receiving a signal s modulated by a modulator,
   - gain variation means (M1) making it possible to vary a complex gain Z applied to the received signal s between at least two predetermined values Z1 and Z2;
   - measuring and calculation means (M2) making it possible to measure the position PD1 and PD2 of the central carrier of the demodulated signal s for each one of the applied gains Z1 and Z2 and to calculate at least one part of the carrier leak from the measured positions PD1 and PD2 and the applied gains Z1 and Z2, with the part of the calculated carrier leak corresponding to the leak caused by the modulator.

10. An estimator according to the previous claim, **characterized in that** it includes a connection between the gain variation means (M1) and the measuring and calculation means (M2) enabling the measuring and calculation means (M2) to select the gain applied by the gain variation means (M1).

11. An estimator according to the preceding claim **characterized in that** the gain variation means (M1) include 2 UHF relays or 2 switches: the first one receiving the signal s which the gain Z1 has been applied to, the second one receiving the signal s which the gain Z2 has been applied to, with the relay corresponding to the gain selected by the measuring and calculation means (M2) being connected to the gain variation means (M1) output.

12. An estimator according to any one of claims 10 or 11, **characterized in that** the gain application means include:

- either a 0°-90° coupler receiving the modulated signal s and transmitting the signal s to the 0° output thereof and the signal s shifted by 90° to the 90° output thereof,
- or a transformer or an amplifier receiving the modulated signal s and transmitting the signal s, and the 180° shifted signal s,
- or an electrical length 1 receiving the modulated signal s and transmitting the signal s, and the signal s shifted by φ depending on 1.

13. A modulation system with automatic control of the carrier including a modulator receiving the signal to be modulated m and supplying the modulated signal s to be emitted, **characterized in that** it includes:

- an estimator according to any one of claims 10 to 12 receiving the modulated signal s,
- a demodulator receiving the signal Sz from the gain variation means (M1) and supplying the demodulated signal d to the measuring and calculation means (M2),
- carrier automatic control means, making it possible to add to the signal to be modulated m the carrier leak caused by the modulator supplied by the measuring and calculation means (M2).

14. A modulation system according to the previous claim **characterized in that** the carrier automatic control means further make it possible to add to the demodulated signal d the carrier leak caused by the demodulator supplied by the measuring and calculation means (M2) before supplying the corrected demodulated signal to the measuring and calculation means (M2).

15. The utilisation of the estimation method according to any one of claims 1 to 6, for a modulation with a zero central carrier.

16. The utilisation of the estimation method according to any one of claims 1 to 4, or 7, or 8, for a modulation with a non-zero central carrier.

**Patentansprüche**

1. Verfahren zum Schätzen des Rests einer Trägerwelle, **dadurch gekennzeichnet, dass** es umfasst:

- Empfangen eines Signals s, das durch einen Modulator moduliert ist;
- Verändern einer komplexen Verstärkung Z, die auf das empfangene Signal s angewendet wird, zwischen wenigstens zwei Werten Z1 und Z2;
- Messen der Position, PD 1 und PD2, der zentralen Trägerwelle des demodulierten Signals s für jede der angewendeten Verstärkungen Z1 und Z2;
- Berechnen wenigstens eines Teils des Rests der Trägerwelle anhand der gemessenen Positionen PD1 und PD2 und der angewendeten Verstärkungen Z1 und Z2, wobei der berechnete Teil des Rests der Trägerwelle dem durch den Modulator bedingten Rest entspricht.

2. Schätzverfahren nach dem vorhergehenden Anspruch, **dadurch gekennzeichnet, dass** die Verstärkung Z1 zu einem gegebenen Zeitpunkt t1 und während einer vorgegebenen Dauer T1 angewendet wird und die komplexe Verstärkung Z2 zu einem gegebenen Zeitpunkt t2 und während einer vorgegebenen Dauer T2 angewendet wird.

3. Schätzverfahren nach einem der vorhergehenden Ansprüche, **dadurch gekennzeichnet, dass** Z2 = -Z1 ist.

4. Schätzverfahren nach einem der vorhergehenden Ansprüche, **dadurch gekennzeichnet, dass** ein anderer Teil des Rests der Trägerwelle, der anhand der gemessenen Positionen PD1 und PD2 und der angewendeten Verstärkungen Z1 und Z2 berechnet wird, dem Rest entspricht, der durch den zum Demodulieren des Signals s verwendeten Demodulator bedingt ist.

5. Schätzverfahren nach einem der vorhergehenden Ansprüche, **dadurch gekennzeichnet, dass** die Berechnung wenigstens eines Teils des Rests der Trägerwelle der Minimierung der Differenz ‖PD2 - PD1‖ zwischen den zwei gemessenen Positionen entspricht.

6. Schätzverfahren nach dem vorhergehenden Anspruch, **dadurch gekennzeichnet, dass** die Minimierung durch ein Verfahren des Gradiententyps ausgeführt wird.

7. Schätzverfahren nach einem der Ansprüche 1 oder 4, **dadurch gekennzeichnet, dass** die Berechnung wenigstens eines Teils des Rests der Trägerwelle umfasst:

   - Messen der Verstärker Z anhand des demodulierten Signals d,
   - Anwenden einer Verstärkung 1/Z auf die gemessene Position PD vor dem Messen der Position der zentralen Trägerwelle und
   - Bilden der Differenz zwischen dem somit erhaltenen Wert und der theoretischen zentralen Trägerwelle, was ermöglicht, eine Schätzung des Rests der Trägerwelle für jeden Wert von Z, offset_fl und offset_f2, zu erhalten, und
   - Operieren mit

$$offset\_f1 - \frac{1}{Z1} \frac{\left(offset\_f2 - offset\_f1\right)}{\left(\left(1/Z2\right) - 1/Z1\right)},$$

was ermöglicht, den Teil des Rests der Trägerwelle, der durch den Modulator bedingt ist, zu erhalten.

8. Schätzverfahren nach dem vorhergehenden Anspruch, **dadurch gekennzeichnet, dass** das Berechnen wenigstens eines Teils des Rests der Trägerwelle das Operieren mit

$$\frac{\left(offset\_f2 - offset\_f1\right)}{\left(\left(1/Z2\right) - 1/Z1\right)}$$

umfasst, was ermöglicht, den Teil des Rests der Trägerwelle, der durch den Demodulator bedingt ist, zu erhalten.

9. Trägerwellenrest-Schätzvorrichtung, um das Schätzverfahren nach einem der Ansprüche 1 bis 8 auszuführen, **dadurch gekennzeichnet, dass** sie umfasst:

   - Mittel zum Empfangen eines Signals s, das durch einen Modulator moduliert ist;
   - Mittel (M1) zum Verändern der Verstärkung, die ermöglichen, eine komplexe Verstärkung Z, die auf das empfangene Signal s angewendet wird, zwischen wenigstens zwei vorgegebenen Werten Z1 und Z2 zu verändern;
   - Mittel (M2) zum Messen und Berechnen, die ermöglichen, die Position, PD1 und PD2, der zentralen Trägerwelle des demodulierten Signals s für jede der angewendeten Verstärkungen, Z1 und Z2, zu messen und wenigstens einen Teil des Rests der Trägerwelle anhand der gemessenen Positionen PD1 und PD2 und der angewendeten Verstärkungen Z 1 und Z2 zu berechnen, wobei der Teil des Rests der berechneten Trägerwelle dem Rest entspricht, der durch den Modulator bedingt ist.

10. Schätzeinrichtung nach dem vorhergehenden Anspruch, **dadurch gekennzeichnet, dass** sie eine Verbindung zwischen den Verstärkungsveränderungsmitteln (M1) und den Mess- und Berechnungsmitteln (M2) umfasst, die den Mess- und Berechnungsmitteln (M2) ermöglicht, die von den Verstärkungsveränderungsmitteln (M1) angewendete Verstärkung zu wählen.

11. Vorrichtung nach dem vorhergehenden Anspruch, **dadurch gekennzeichnet, dass** die Verstärkungsveränderungsmittel zwei UHF-Relais oder zwei Kommutatoren umfasst: wobei das bzw. der erste das Signal s empfängt, auf das die Verstärkung Z1 angewendet worden ist, wobei das bzw. der zweite das Signal s empfängt, auf das die Verstärkung Z2 angewendet worden ist, wobei das Relais, das der Verstärkung entspricht, die von den Mess- und Berechnungsmitteln (M2) gewählt wird, mit dem Ausgang der Verstärkungsveränderungsmittel (M1) verbunden ist.

**12.** Schätzvorrichtung nach einem der Ansprüche 10 oder 11, **dadurch gekennzeichnet, dass** die Verstärkungsanwendungsmittel umfassen:

- entweder einen 0°-90°-Koppler, der das modulierte Signal s empfängt und dieses Signal s an seinen 0°-Ausgang und das um 90° phasenverschobene Signal s an seinen 90°-Ausgang überträgt, oder
- einen Transformator oder einen Verstärker, der das modulierte Signal s empfängt und dieses Signal s sowie das um 180° phasenverschobene Signal s überträgt, oder
- eine elektrische Länge 1, die das modulierte Signal s empfängt und dieses Signal s sowie das um $\phi$ phasenverschobene Signal s als Funktion von 1 überträgt.

**13.** Modulationssystem mit Trägerwellenregelung, das einen Modulator enthält, der das zu modulierende Signal m empfängt und das zu sendende modulierte Signal s liefert, **dadurch gekennzeichnet, dass** es umfasst:

- eine Schätzvorrichtung nach einem der Ansprüche 10 bis 12, die das modulierte Signal s empfängt,
- einen Demodulator, der das Signal Sz empfängt, das von den Verstärkungsveränderungsmitteln (M1) stammt, und zu den Mess- und Berechnungsmitteln das demodulierte Signal d liefert,
- Mittel zum Regeln der Trägerwelle, die ermöglichen, zu dem zu modulierenden Signal m den Rest der Trägerwelle, der durch den Modulator bedingt ist und von den Mess- und Berechnungsmitteln (M2) geliefert wird, hinzuzufügen.

**14.** Modulationssystem nach dem vorhergehenden Anspruch, **dadurch gekennzeichnet, dass** die Trägerwellen-Regelungsmittel außerdem ermöglichen, zu dem demodulierten Signal d den Rest der Trägerwelle, der durch den Demodulator bedingt ist und von den Mess- und Berechnungsmitteln (M2) geliefert wird, hinzuzufügen, bevor das korrigierte demodulierte Signal zu den Mess- und Berechnungsmitteln (M2) geliefert wird.

**15.** Verwendung des Schätzverfahrens nach einem der Ansprüche 1 bis 6 für die Modulation mit zentraler Trägerwelle null.

**16.** Verwendung des Schätzverfahrens nach einem der Ansprüche 1 bis 4 oder 7 oder 8 für eine Modulation mit von null verschiedener zentraler Trägerwelle.

**Fig. 1**

**Fig. 2a**

**Fig. 2b**

Fig. 3

Fig. 4

M1

$L_{2\rightarrow1}$ → | M1$_3$ |

c

| M1$_1$ |

s → | M1$_1$ | → $s_{Z1}$ → M1$_{2,1}$ → s → dem

$s_{Z1}$ → M1$_{2,2}$

## Fig. 5

d → | M2 | → C'$_a$

## Fig. 6

M2$_b$

fc

$\hat{fc}$

d → | M2$_1$ | → | M2$_2$ | → | 1/Z | → ⊖ → offset_f

fg

| M2$_3$ | → Z

## Fig. 7

offset_im

Im

LO

Q m

offset_qm

LO + 90°

## Fig. 8

offset_id

Id

LO

offset_qd

LO + 90°

## Fig. 9

Fig. 10a

Fig. 10b

**EP 1 642 433 B1**

## RÉFÉRENCES CITÉES DANS LA DESCRIPTION

**Documents brevets cités dans la description**

- US 6028900 A, Taura